# EUROPEAN PATENT APPLICATION

(11) **EP 1 434 207 A2**
(43) Date of publication of application: **30.06.2004**
(21) Application number: 03258082.1
(22) Date of filing: 19.12.2003
(51) Int. Cl.: G11B 7/007, G11B 7/24, G11B 7/0045

(54) **Optical information recording method and optical information recording medium**

(30) Priority: 19.12.2002 JP 2002368061; 08.01.2003 JP 2003001952
(71) Applicant: FUJI PHOTO FILM CO., LTD., Kanagawa-ken (JP)
(72) Inventor: Usami, Yoshihisa Fuji Photo Film Co. Ltd., Odawara-shi Kanagawa (JP); Kakuta, Takeshi Fuji Photo Film Co. Ltd., Odawara-shi Kanagawa (JP); Ishida, Toshio Fuji Photo Film Co. Ltd., Odawara-shi Kanagawa (JP)
(74) Representative: Stevens, Jason Paul

(57) **Abstract**

The present invention provides an optical information recording medium including a substrate with an on-groove and an in-groove, having successively disposed thereon a dye recording layer and a transparent sheet, wherein a width of the on-groove ranges from 50 to 140 nm, and a barrier layer is formed between the recording layer and the transparent sheet. The invention also provides an optical information recording method including irradiating the optical information recording medium with laser light from the side of the medium provided with a cover layer to form a void at a signal pit portion in the dye recording layer and thereby carrying out recording of information as well as an optical information recording medium on which information has been recorded by the method.

## Description

### BACKGROUND OF THE INVENTION

### Field of the Invention

The present invention relates to an optical information recording method and an optical information recording medium. More specifically, the invention relates to a method of recording on a write-once optical information recording medium by heat mode, and an optical information recording medium on which optical information has been recorded by the recording method.

### Description of the Related Art

Write-once optical information recording media on which information can be written only once by irradiating with laser light are called CD-Rs and are widely known. CD-Rs have an advantage in that information is reproducible using a commercially available CD player, and in recent years has seen increased demand with permeation of personal computers. Writable digital versatile discs (DVD-Rs), which are recording media having higher density than that of CD-Rs in order to accommodate recording for Digital High-Vision Television, are also in practical use.

A DVD-R typically comprises two transparent disc substrates, each having successively disposed thereon a recording layer containing an organic dye, a light-reflective layer, and a protective layer, with the discs being adhered so that the recording layers face inward or so that protective substrates having the same disc shape as these discs are disposed on outer sides of the adhered discs. The transparent disc substrate includes a guide groove (pre-groove) used for tracking a laser irradiated onto the DVD-R, with the groove having a narrow track pitch (0.74 to 0.8 µm) that is equal to or less than half of that in a CD-R. Information is recorded and reproduced (played back) by irradiating the DVD-R with laser light in a visible region (usually laser light having a wavelength region ranging from 630 to 680 nm), whereby information can be recorded at a higher density than a CD-R.

As one representative structure, there is known a write-once optical information recording medium comprising a disc-shaped substrate having successively disposed thereon a light-reflective layer which contains Au or the like, a recording layer which contains an organic compound, and a cover layer which includes an adhesive resin layer to allow adhesion to the recording layer. Information can be recorded on and reproduced from this optical information recording medium by irradiating laser light from the adhesive resin layer. Specifically, the portion of the recording layer that is irradiated absorbs light, whereby the temperature rises at the irradiated portion. The rise in temperature causes a local thermal change in shape (e.g., formation of pits) at the irradiated portion, whereby information is recorded. The information thus recorded on the CD-R is ordinarily reproduced by irradiating the CD-R with laser light having the same wavelength as that of the laser light used to record the information, and by detecting a difference in reflectance between the region of the recording layer having undergone the thermal change (recorded portion) and the region of the recording layer that has not been subjected to the thermal change (unrecorded portion).

Recently, high-vision television and networks such as the Internet have rapidly become widespread. In addition, HDVT (High Definition Television) broadcasting has started. As a result, large-capacity optical recording media capable of recording visual information easily and inexpensively are in demand. While DVD-Rs currently play a significant role as large-capacity recording media, demand for media having greater recording capacity and higher density continues to escalate, and development of recording media that can satisfy such demand is also needed. Thus, in the area of optical information recording media, further developments on larger capacity recording media are being carried out, in which high-density recording can be performed using shorter wavelength laser light. In particular, development of write-once recording medium that is capable of recording information only once is strong demand since there is increased usage of this medium for long-term storage or as back-up for large capacity information.

Methods have been disclosed for recording information on and reproducing information from an optical information recording medium including a recording layer containing an organic dye, by irradiating, from the side of the medium disposed with the recording layer towards the side of the medium disposed with a light-reflective layer, the medium with laser light having a wavelength of 530 nm or less (refer to, for example, Japanese Patent Application Laid-Open (JP-A) Nos. 2000-43423, 2000-108513, 2000-113504, 2000-149320, 2000-158818 and 2000-228028). In these methods, information is recorded on and reproduced from an optical disc having a recording layer containing a porphyrin compound, an azo-based dye, a metal azo-based dye, a quinophthalone-based dye, a trimethine cyanine dye, a dicyanobiphenyl-skeleton dye, a coumarin dye, a naphthalocyanine compound or the like, by irradiating the optical disc with a blue laser (having a wavelength of 430 nm or 488 nm) or a blue-green laser (having a wavelength of 515 nm).

However, the present inventors have found that practically employable sensitivity cannot be obtained with the discs disclosed in the above publications when information is recorded on the discs by irradiating the discs with short-wave laser beam having a wavelength of 450 nm or less, and that sufficient levels cannot been achieved with respect to other recording characteristics such as reflectance and modulation. Thus, further improvements are needed. In particular, it was found that recording characteristics of the optical discs disclosed in the above publications diminished when the discs were irradiated with laser light having a wavelength of 450 nm or less.

Usually, higher density of the optical information recording medium can be accomplished by shortening a recording and reproducing laser wavelength, or by decreasing a size of a beam spot by obtaining a higher NA pick-up. In recent years, rapid developments have been carried out on a variety of lasers, ranging from red semiconductor lasers having wavelengths of 680 nm, 650 nm and 635 nm, to a blue-violet semiconductor laser (hereinafter referred to as a blue-violet laser) having a wavelength of 400 nm to 500 nm which is capable of ultra-high density recording, as well as optical information recording media that can be used with such lasers. In particular, since the launch of blue-violet laser, an optical recording system utilizing the blue-violet laser and a high NA pickup has been researched. A rewritable-type optical information recording medium having a phase-transition recording layer and an optical recording system have already been published as a DVR system ("ISOM 2000", page 210 to page 211). This system has solved, to a certain degree, the issue of achieving higher density in the rewritable-type optical information recording medium.

As an optical recording medium for use in the optical recording system utilizing a blue-violet laser and a high NA pickup, a method of recording and reproducing information is known in which laser light having a wavelength of 530 nm or less is irradiated from the recording layer side to the light-reflective layer side as described above (refer to, for example, JP-A Nos. 4-74690, 7-304256, 7-304257, 8-127174, 11-53758, 11-334204, 11-334205, 11-334206, 11-334207, 2000-43423, 2000-108513, 2000-113504, 2000-149320, 2000-158818 and 2000-228028). In this method, an optical information recording medium provided with a recording layer containing a dye compound similarly to the aforementioned medium is irradiated with blue laser light (wavelength: 430 nm and 488 nm) or blue-green laser light (wavelength: 515 nm) to record and reproduce information.

However, the inventors have found through research that there are cases where practical, employable and stable recording characteristics cannot be obtained when optical information recording media having such a construction as described in the above publications and the optical information recording method mainly depending on an output of the laser light are used, and this has long been a major issue.

### SUMMARY OF THE INVENTION

It is an object of at least the preferred embodiments of the present invention to provide an optical information recording medium that is capable of recording at high density and has high recording characteristics. Another object of the preferred embodiments of the present invention is to provide an optical information recording method that can provide stable recording and reproducing characteristics, as well as an optical information recording medium on which information has been recorded by the recording method.

The above objects are attained by at least the preferred embodiments of the inventions described hereinafter.

A first aspect of the invention is an optical information recording medium which comprises a substrate including an on-groove and an in-groove, the substrate having successively disposed thereon a recording layer containing a dye, and a transparent sheet, wherein information is recorded and reproduced by irradiating laser light from the side of the medium disposed with the transparent sheet, a width of the on-groove ranges from 50 to 140 nm, and a barrier layer is formed between the recording layer and the transparent sheet.

The on-groove of the optical information recording medium preferably has a height of 20 to 50 nm.

A second aspect of the invention is an optical information recording method which comprises irradiating an optical information recording medium, that includes a substrate having successively disposed thereon a dye recording layer and a cover layer on a surface of the recording layer via a pressure sensitive adhesive layer or an adhesive layer, with laser light from the side of the medium disposed with the cover layer to form a void at a signal pit portion in the dye recording layer and thereby carrying out recording of information, wherein a pulse width and/or power of the laser light is controlled such that a width of the void falls within a range of 50 to 250 nm.

A third aspect of the invention is an optical information recording method which comprises irradiating an optical information recording medium, that includes a substrate having successively disposed thereon a dye recording layer and a cover layer on a surface of the recording layer via a pressure sensitive adhesive layer or an adhesive layer, with laser light from the side of the medium disposed with the cover layer to form a void at a signal pit portion in the dye recording layer and thereby carrying out recording of information, wherein a pulse width and/or power of the laser light is controlled such that a proportion of a height of the void to a thickness of the dye recording layer falls within a range of 20 to 95%.

Further, the invention provides an optical information recording medium on which information has been recorded by the optical information recording method according to the second or third aspect.

### BRIEF DESCRIPTION OF THE DRAWINGS

Fig. 1 is a partial sectional view that explains a shape of a groove of a substrate.
Fig. 2 is a schematic sectional view of a main part of an optical information recording medium having a void formed therein, taken along a line of the axis direction thereof.

### DETAILED DESCRIPTION OF THE INVENTION

An optical information recording medium, an optical information recording method, and an optical information recording medium on which information has been recorded by the recording method according to the present invention will be explained in more detail below.

The optical recording medium according to a first aspect of the invention comprises a substrate including an on-groove and an in-groove, having successively disposed thereon a recording layer containing a dye, and a transparent sheet, and a width of the on-groove ranges from 50 to 140 nm, and a barrier layer is formed between the recording layer and the transparent sheet. Information is recorded and reproduced by irradiating the medium with laser light from the side thereof disposed with the transparent sheet. The height of the on-groove is preferably 20 to 50 nm.

The optical information recording medium according to the first aspect has a construction in which at least the light-reflective layer, the recording layer and the transparent sheet are formed in this order on the substrate. The transparent sheet is preferably disposed on the recording layer through a pressure sensitive adhesive or an adhesive.

The optical information recording method according to the second aspect of the invention comprises irradiating an optical information recording medium, that includes a substrate having successively disposed thereon a dye recording layer and a cover layer on a surface of the recording layer via a pressure sensitive adhesive layer or an adhesive layer, with laser light from the side of the medium disposed with the cover layer to form a void at a signal pit portion in the dye recording layer and thereby carrying out recording of information, wherein a pulse width and/or power of the laser light is controlled such that the width of the void falls within a range of 50 to 250 nm.

The optical information recording method according to the third aspect of the invention comprises irradiating an optical information recording medium, that includes a substrate having successively disposed thereon a dye recording layer and a cover layer on a surface of the recording layer via a pressure sensitive adhesive layer or an adhesive layer, with laser light from the side of the medium disposed with the cover layer to form a void at a signal pit portion in the dye recording layer and thereby carrying out recording of information, wherein a pulse width and/or power of the laser light is controlled such that a proportion of a height of the void to a thickness of the dye recording layer falls within a range of 20 to 95%.

### <Optical Information Recording Medium>

First, description will be given of the optical information recording medium according to the first aspect of the invention which is a writable-once and dye-containing optical information recording medium.

The optical information recording medium according to the first aspect includes a transparent sheet, on the surface of the side provided with the dye recording layer disposed on the substrate through a pressure sensitive adhesive layer or an adhesive layer, and may further include a light-reflective layer and a barrier layer as optional layers.

### Substrate

As the substrate, a suitable material selected arbitrarily from various materials used as substrate materials for conventional optical information recording media may be used.

Specific examples of the material include glass; polycarbonate, acryl resins such as a polymethylmethacrylate; vinyl chloride type resins such as polyvinyl chloride and vinyl chloride copolymers; epoxy resins; amorphous polyolefins; polyesters; and metals such as aluminum. These materials may be used in combination, if necessary.

Among these materials, polycarbonate and amorphous polyolefins are preferable, and polycarbonate is particularly preferable from the viewpoint of moisture resistance, dimensional stability and cost.

The thickness of the substrate is preferably in a range of 1.1 ± 0.3 mm.

A guide groove (an on-groove and an in-groove, hereinafter simply referred to as a "groove") for tracking or representing information such as address signals is formed on the surface of the substrate. As the substrate, a substrate having a groove with a narrower track pitch than that of CD-Rs or DVD-Rs is preferably used to attain higher recording density.

In the optical information recording medium according to the first aspect of the invention, the track pitch of the substrate preferably ranges from 300 to 360 nm, and more preferably from 310 to 340 nm.

The depth of the groove (a height of the on-groove) preferably ranges from 20 to 50 nm. When the depth is less than 20 nm, there is the case where tracking error signals are small enough to make tracking ineffective. When the depth exceeds 50 nm, there arises a case of difficult molding performed. The depth more preferably ranges from 25 to 40 nm.

The width of the groove (a width of the on-groove) generally ranges from 50 nm to 140 nm. When the width is less than 50 nm, tracking errors are lowered to make tracking ineffective. When the width exceeds 140 nm, jitters may eventually be increased. The width preferably ranges from 70 nm to 130 nm, and more preferably from 90 nm to 120 nm.

The groove inclination angle of the on-groove preferably ranges from 20 to 80°, and more preferably from 30 to 70°.

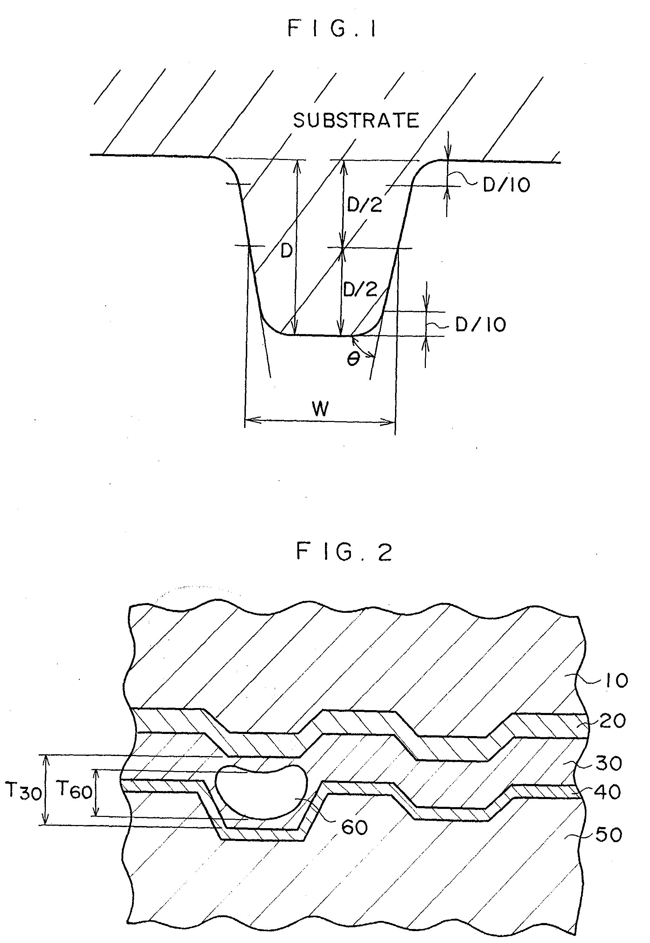

In more detail, a schematic sectional view showing the shape of the on-groove is shown in Fig. 1. As is defined in Fig. 1, a groove depth D of the groove (the height of the on-groove) is a distance from a surface of the substrate on which groove have not yet been formed to the deepest position of the groove, the groove width W of the on-groove is a width at a depth of D/2 and a groove inclination angle θ of the on-groove is an angle formed by the substrate plane with the line connecting the inclined part at a depth of D/10 from the surface of the substrate before no grooves have been formed to the inclined part at a height of D/10 from the deepest position of the groove. These values may be obtained by conducting measurements using an AFM (atomic force microscope).

In a non-recorded optical information recording medium used in the optical information recording method according to the second or third aspect, the track pitch of the groove on the substrate preferably ranges from 200 nm to 400 nm, and more preferably from 250 nm to 350 nm.

The groove depth of the groove preferably ranges from 10 nm to 150 nm, more preferably from 20 nm to 100 nm, and still more preferably from 30 nm to 80 nm. Also, the half value width of the groove preferably ranges from 50 nm to 250 nm, and more preferably from 100 nm to 200 nm.

It is preferable to form this groove directly on the substrate when a resin material such as polycarbonate is injection-molded or extrusion-molded.

Also, the groove formation may be carried out by providing a groove layer. As the material for forming the groove layer, a mixture of at least one monomer (or an oligomer) among monoesters, diesters, triesters and tetraesters of an acrylic acid and a initiator may be used. The groove may be formed, for example, in the following manner: first, applying a mixed coating solution of the aforementioned acrylate and a polymerization initiator to a precisely prepared stamper, placing a substrate on a layer of the coating solution, and then irradiating ultraviolet rays through the substrate or the stamper to cure the coating layer, whereby the substrate is fixed to the coating layer. Then, the substrate is peeled off from the stamper to thus form grooves. A layer thickness of the groove layer is generally in a range from 0.01 to 100 µm, and preferably from 0.05 to 50 µm.

An undercoat layer is preferably formed on the surface of the substrate on the side at which a light-reflective layer and a dye recording layer, to be described later, are provided for the purpose of enhancing flatness and improving adhesiveness.

Examples of the material used for the undercoat layer include high-molecular materials such as a polymethylmethacrylate, an acrylic acid/methacrylic acid copolymer, a styrene/maleic anhydride copolymer, a polyvinyl alcohol, an N-methylolacrylamide, a styrene/vinyltoluene copolymer, a chlorosulfonated polyethylene, a nitrocellulose, a polyvinyl chloride, a polyolefin chloride, a polyester, a polyimide, a vinyl acetate/vinyl chloride copolymer, an ethylene/vinyl acetate copolymer, a polyethylene, a polypropylene and a polycarbonate and surface modifiers such as silane coupling agents.

The undercoat layer may be formed by dissolving or dispersing the above material in a suitable solvent to prepare a coating solution, and then applying the resultant solution to the surface of the substrate by spin coating, dip coating, extrusion coating or the like. A layer thickness of the undercoat layer is generally in a range from 0.005 to 20 µm, and preferably in a range from 0.01 to 10 µm.

### Light-reflective Layer

The light-reflective layer is an optionally disposed layer between the substrate and the dye recording layer, for the purpose of improving reflectance when information is reproduced. The light-reflective layer may be formed by vapor depositing, sputtering or ion plating a light-reflective material having high reflectance with respect to laser light on the substrate. A layer thickness of the light-reflective layer generally ranges from 10 nm to 300 nm, and preferably from 50 nm to 200 nm.

The above reflectance is preferably over 70%.

Examples of the light-reflective material having a high reflectance include metals and semi-metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, and stainless steel. These light-reflective materials may be used singly or in combination of two or more thereof, or alternatively as alloys. Among these materials, Cr, Ni, Pt, Cu, Ag, Au, Al and stainless steel are preferable. Au, Ag, Al or alloys of these metals are particularly preferable, and Au, Ag or alloys of these materials are most preferable.

### Dye Recording Layer

The dye recording layer preferably contains a dye having a maximum absorption in the wavelength region of laser light when information is recorded and reproduced. Information can be recorded on the recording layer of the optical information recording medium according to the first aspect of the invention by laser light having a wavelength of 500 nm or less.

The dye contained as a recording material in the recording layer may be any of a phase transition metal compound and an organic compound. Examples of the organic compound include cyanine dyes, oxonol dyes, metal complex type dyes, azo dyes, and phthalocyanine dyes.

Specifically, the dyes described in JP-A Nos. 4-74690, 8-127174, 11-53758, 11-334204, 11-334205, 11-334206, 11-334207, 2000-43423, 2000-108513 and 2000-158818 are preferably used.

The recording material is not limited to these dyes, and additionally, triazole compounds, triazine compounds, cyanine compounds, merocyanine compounds, aminobutadiene compounds, phthalocyanine compounds, cinnamic acid compounds, viologen compounds, azo compounds, oxonol benzoxazole compounds and benzotriazole compounds may preferably be used. Among those listed above, cyanine dyes, aminobutadiene compounds, benzotriazole compounds and phthalocyanine dyes are particularly preferable.

In the present invention, it is preferable to include in the dye recording layer the phthalocyanine dye represented by the following formula (I): 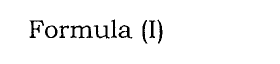 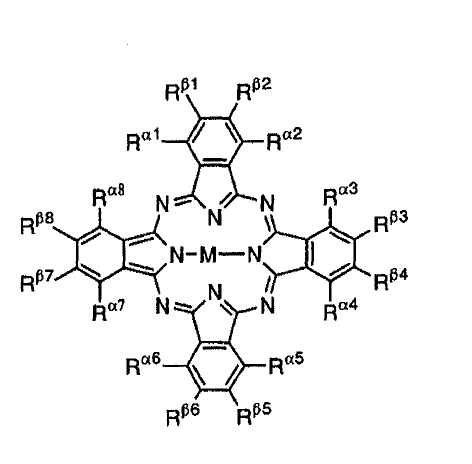 wherein R^{α1} to R^{α8} and R^{β1} to R^{β8} each independently represents one selected from the group consisting of a hydrogen atom, a halogen atom, a cyano group, a nitro group, a formyl group, a carboxyl group, a sulfo group, an alkyl group having 1 to 20 carbon atoms which may be substituted or unsubstituted, an aryl group having 6 to 14 carbon atoms which may be substituted or unsubstituted, a heterocyclic group having 1 to 10 carbon atoms which may be substituted or unsubstituted, an alkoxy group having 1 to 20 carbon atoms which may be substituted or unsubstituted, an aryloxy group having 6 to 14 carbon atoms which may be substituted or unsubstituted, an acyl group having 2 to 21 carbon atoms which may be substituted or unsubstituted, an alkylsulfonyl group having 1 to 20 carbon atoms which may be substituted or unsubstituted, an arylsulfonyl group having 6 to 14 carbon atoms which may be substituted or unsubstituted, a heterylsulfonyl group having 1 to 10 carbon atoms, a carbamoyl group having 1 to 25 carbon atoms which may be substituted or unsubstituted, a sulfamoyl group having 0 to 32 carbon atoms which may be substituted or unsubstituted, an alkoxycarbonyl group having 2 to 20 carbon atoms which may be substituted or unsubstituted, an aryloxycarbonyl group having 7 to 15 carbon atoms, an acylamino group having 2 to 21 carbon atoms which may be substituted or unsubstituted, or a sulfonylamino group having 1 to 20 carbon atoms which may be substituted or unsubstituted. In formula (I), all of R^{α1} to R^{α8} are not simultaneously hydrogen atoms, and at least eight of the substituents of R^{α1} to R^{α8} and R^{β1} to R^{β8} are hydrogen atoms. M represents two hydrogen atoms, a divalent- to tetravalent-metal, a divalent- to tetravalent- metal oxide, or a divalent- to tetravalent-metal having a ligand.

Preferably, in formula (I), R^{α1} to R^{α8} and R^{β1} to R^{β8} each independently represents one selected from the group consisting of a hydrogen atom, a halogen atom, a carboxyl group, a sulfo group, an alkyl group having 1 to 16 carbon atoms (for example, a methyl group, an ethyl group, n-propyl group, or a i-propyl group)which may be substituted or unsubstituted, an aryl group having 6 to 14 carbon atoms (for example, a phenyl group, a p-methoxyphenyl group, or a p-octadecylphenyl group) which may be substituted or unsubstituted, an alkoxy group having 1 to 16 carbon atoms (for example, a methoxy group, an ethoxy group, or an n-octyloxy group) which may be substituted or unsubstituted, an aryloxy group having 6 to 10 carbon atoms atoms (for example, a phenoxy group or a p-ethoxyphenoxy group) which may be substituted or unsubstituted, an alkylsulfonyl group having 1 to 20 carbon atoms (for example, a methanesulfonyl group, an n-propylsulfonyl group, or a butanesulfonyl group) which may be substituted or unsubstituted, an arylsulfonyl group having 6 to 14 carbon atoms (for example, a toluene sulfonyl group or a benzenesulfonyl group) which may be substituted or unsubstituted, a sulfamoyl group having 0 to 20 carbon atoms (for example, a methyl sulfamoyl group or an n-butylsulfamoyl group) which may be substituted or unsubstituted, an alkoxycarbonyl group having 1 to 17 carbon atoms (for example, a methoxy carbonyl group or an n-butoxycarbamoyl group), an aryloxycarbonyl group having 7 to 15 carbon atoms (for example, a phenoxycarbonyl group or an m-chlorophenylcarbonyl group), an acylamino group having 2 to 21 carbon atoms (for example, an acetylamino group, a pyvaloylamino group, or an n-hexylamino group) which may be substituted or unsubstituted, a sulfonylamino group having 1 to 18 carbon atoms (for example, a methanesulfonylamino group or an n-buthanesulfonylamino group).

In formula (I), R^{α1} to R^{α8} and R^{β1} to R^{β8} each independently represents a hydrogen atom, a halogen atom, a carboxyl group, a sulfo group, an alkyl group having 1 to 16 carbon atoms which may be substituted or unsubstituted, an alkoxy group having 1 to 16 carbon atoms which may be substituted or unsubstituted, an alkylsulfonyl group having 1 to 20 carbon atoms, an arylsulfonyl group having 6 to 14 carbon atoms, a sulfamoyl group having 2 to 20 carbon atoms, an alkoxycarbonyl group having 1 to 13 carbon atoms, an acylamino group having 2 to 21 carbon atoms which may be substituted or unsubstituted, and a sulfonylamino group having 1 to 18 carbon atoms.

Still more preferably, R^{α1} to R^{α8} each independently represents a hydrogen atom, a halogen atom, a sulfo group, an alkoxy group having 1 to 16 carbon atoms which may be substituted or unsubstituted, an alkylsulfonyl group having 1 to 20 carbon atoms which may be substituted or unsubstituted, an arylsulfonyl group having 6 to 14 carbon atoms which may be substituted or unsubstituted, a sulfamoyl group having 2 to 20 carbon atoms which may be substituted or unsubstituted, an acylamino group having 2 to 12 carbon atoms, and a sulfonylamino group having 1 to 18 carbon atoms, and R^{β1} to R^{β8} each independently represents R^{β1} a hydrogen atom or a halogen atom.

Even more preferably, R^{α1} to R^{α8} each independently represents a hydrogen atom, a sulfo group, an unsubstituted alkylsulfonyl group having 1 to 20 carbon atoms, an unsubstituted arylsulfonyl group having 6 to 14 carbon atoms, and an unsubstituted arylsulfonyl group having 7 to 20 carbon atoms, with R^{β1} to R^{β8} being a hydrogen atom.

Preferably, in formula (I), four substituents (namely, one of R^{α1} and R^{α2}, one of R^{α3} and R^{α4}, one of R^{α5} and R^{α6}, and one of R^{α7} and R^{α8}) are not simultaneously hydrogen atoms.

In formula (I), R^{α1} to R^{α8} and R^{β1} to R^{β8} each may further have a substituent.

Examples of the substituent include a chain or cyclic alkyl group having 1 to 20 carbon atoms which may be substituted or unsubstituted (for example, a methyl group, an ethyl group, an isopropyl group a cyclohexyl group, a benzyl group, or a phenetyl group), an aryl group having 6 to 18 carbon atoms which may be substituted or unsubstituted (for example, a phenyl group, a chlorophenyl group, a 2,4-di-t-amylphenyl group, or a 1-naphthyl group), an alkenyl group having 2 to 20 carbon atoms which may be substituted or unsubstituted (for example, a vinyl group or a 2-methylvinyl group), an alkynyl group having 2 to 20 carbon atoms which may be substituted or unsubstituted (for example, an ethynyl group, a 2-methylethynyl group, a 2-phenylethynyl group), a halogen atom (for example, F, Cl, Br, I), a cyano group, a hydroxyl group, a carboxyl group, an acyl group having 2 to 20 carbon atoms which may be substituted or unsubstituted (for example, an acetyl group, a benzoyl group, a salicyloyl group or a pivaloyl group), an alkoxy group having 1 to 20 carbon atoms which may be substituted or unsubstituted (for example, a methoxy group, a butoxy group, or a cyclohexyloxy group), an aryloxy group having 6 to 20 carbon atoms (for example, a phenoxy group, a 1-naphthoxy group, or a p-methoxyphenoxy group), an alkylthio group having 1 to 20 carbon atoms which may be substituted or unsubstituted (for example, a methylthio group, a butylthio group, a benzylthio group, or a 3-methoxypropylthio group), an arylthio group having 6 to 20 carbon atoms which may be substituted or unsubstituted (for example, a phenylthio group or a 4-chlorophenylthio group), an alkylsulfonyl group having 1 to 20 carbon atoms which may be substituted or unsubstituted (for example, a methanesulfonyl group or a butanesulfonyl group), an arylsulfonyl group having 6 to 20 carbon atoms which may be substituted or unsubstituted (for example, a benzenesulfonyl group or a paratoluene sulfonyl group), a carbamoyl group having 1 to 17 carbon atoms which may be substituted or unsubstituted (for example, an unsubstituted carbamoyl group, a methyl carbamoyl group, an ethyl carbamoyl group, an n-butyl carbamoyl group, or a dimethyl carbamoyl group), an acylamino group having 1 to 16 carbon atoms which may be substituted or unsubstituted (for example, an acetylamino group or a benzoylmino group), an acyloxy group having 2 to 10 carbon atoms which may be substituted or unsubstituted (for example, an acetoxy group or a benzoyloxy group), an alkoxycarbonyl group having 2 to 10 carbon atoms which may be substituted or unsubstituted (for example, a methoxy carbonyl group or an ethoxy carbonyl group), a five- or six-membered heterocyclic group which may be substituted or unsubstituted (for example, an aromatic heterocyclic group such as a pyridyl group, a thienyl group, a furyl group, a thiazolyl group, an imidazolyl group, or a pyrazolyl group; or a heterocyclic group such as a pyrrolidinyl group, a piperidinyl group, a morpholino group, a pyranyl group, a thiopyranyl group, a dioxanyl group, or a dithiolanyl group).

In formula (I), preferable examples of the substituent in R^{α1} to R^{α8} and R^{β1} to R^{β8} are a chain or cyclic alkyl group having 1 to 16 carbon atoms which may be substituted or unsubstituted, an aryl group having 6 to 14 carbon atoms which may be substituted or unsubstituted, an alkoxy group having 1 to 16 carbon atoms, an aryloxy group having 6 to 14 carbon atoms which may be substituted or unsubstituted, a halogen atom, an alkoxycarbonyl group having 2 to 17 carbon atoms which may be substituted or unsubstituted, a carbamoyl group having 1 to 10 carbon atoms which may be substituted or unsubstituted, and an acylamino group having 1 to 10 carbon atoms which may be substituted or unsubstituted.

More preferable examples are a chain or cyclic alkyl group having 1 to 10 carbon atoms which may be substituted or unsubstituted, an aryl group having 6 to 10 carbon atoms, an alkoxy group having 1 to 10 carbon atoms which may be substituted or unsubstituted, an aryloxy group having 6 to 10 carbon atoms which may be substituted or unsubstituted, chlorine atom, an alkoxycarbonyl group having 2 to 11 carbon atoms which may be substituted or unsubstituted, a carbamoyl group having 1 to 7 carbon atoms which may be substituted or unsubstituted, and an acylamino group having 1 to 8 carbon atoms which may be substituted or unsubstituted.

Particularly preferable examples are a branched chain or cyclic alkyl group having 1 to 8 carbon atoms which may be substituted or unsubstituted, an alkoxy group having 1 to 8 carbon atoms which may be substituted or unsubstituted, an alkoxycarbonyl group having 3 to 9 carbon atoms which may be substituted or unsubstituted, a phenyl group, and a chlorine atom. The most preferable example is an unsubstituted alkoxy group having 1 to 6 carbon atoms.

In formula (I), M is preferably divalent- to tetravalent- metal, more preferably copper, nickel, or palladium, even more preferably copper or nickel, and most preferably copper.

The compounds represented by formula (I) (phthalocyanine dyes) may be bonded at any positions to form a polymer. In this case, each unit may be the same or mutually different, or may bond to a polymer chain such as polystyrene, polymethacrylate, polyvinyl alcohol, or cellulose.

While specifically preferable examples of the phthalocyanine dye used in the invention are shown below, the present invention is not limited to these examples.

In the following Tables 1 to 7, R^{x} / R^{y} (each of x and y represents either one of α1 to α8 or β1 to β8) means either one of R^{x} or R^{y}. Accordingly, compounds indicated thereby are mixtures of substitution position isomers. In the case of unsubstituted compounds, i.e. the compounds substitute hydrogen atoms, the representation is omitted.

**Table 1**

| No. | Substituents and Position thereof | M |
|---|---|---|
| (1) | R^{α1}/R^{α2}, R^{α3}/R^{α4}, R^{α5}/R^{α6}, R^{α7}/R^{α8} -SO₂N-(C₅H₁₁-*i*) ₂ | Cu |
| (2) | R^{α1}/R^{α2}, R^{α3}/R^{α4}, R^{α5}/R^{α6}, R^{α7}/R^{α8} -SO₂NH-(2-s-butoxy-5-t-amylphenyl) | Cu |
| (3) | R^{α1}/R^{α2}, R^{α3}/R^{α4}, R^{α5}/R^{α6} -SO₂NH{(CH₂) ₃O (2,4-di-t-amynophenyl) } R^{α7}/R^{α8} -SO₃H | Cu |
| (4) | R^{α1}/R^{α2}, R^{α3}/R^{α4}, R^{α5}/R^{α6}, R^{α7}/R^{α8} -SO₂N (3-methoxypropyl) ₂ | Ni |
| (5) | R^{α1}/R^{α2}, R^{α3}/R^{α4}, R^{α5}/R^{α6}, R^{α7}/R^{α8} -SO₂N(CH₃) (cyclohexyl) | Ni |
| (6) | R^{α1}/R^{α2}, R^{α3}/R^{α4}, R^{α5}/R^{α6}, R^{α7}/R^{α8} -SO₂N(3-i-propoxyphenyl) ₂ | Ni |
| (7) | R^{α1}/R^{α2}, R^{α3}/R^{α4}, R^{α5}/R^{α6}, R^{α7}/R^{α8} -SO₂NH(2-i-amyloxycarbonylphenyl) | Pd |
| (8) | R^{α1}/R^{α2}, R^{α3}/R^{α4}, R^{α5}/R^{α6}, R^{α7}/R^{α8} -SO₂NH(2,4,6-trimethylphenyl) | Pd |
| (9) | R^{α1}/R^{α2}, R^{α3}/R^{α4}, R^{α5}/R^{α6}, R^{α7}/R^{α8} -SO₂ (4-morpholino) | Co |
| (10) | R^{α1}/R^{α2}, R^{α3}/R^{α4}, R^{α5}/R^{α6}, R^{α7}/R^{α8} -SO₂N (C₂H₅) (4-fluorophenyl) | Fe |
| (11) | R^{α1}/R^{α2}, R^{α3}/R^{α4}, R^{α5}/R^{α6} -SO₂NH{ (CH₂) ₃N (C₂H₅) ₂} | Cu |

**Table 2**

| No. | Substituents and Position thereof | M |
|---|---|---|
| (12) | R^{α1}/R^{α2}, R^{α3}/R^{α4}, R^{α5}/R^{α6}, R^{α7}/R^{α8} -SO₂ (2-n-propoxyphenyl) | Cu |
| (13) | R^{α1}/R^{α2}, R^{α3}/R^{α4}, R^{α5}/R^{α6}, R^{α7}/R^{α8} -SO₂ (2-n-butoxy-5-t-butylphenyl) | Ni |
| (14) | R^{α1}/R^{α2}, R^{α3}/R^{α4}, R^{α5}/R^{α6}, R^{α7}/R^{α8} -SO₂ (2-methoxycarbonylphenyl) | Co |
| (15) | R^{α1}/R^{α2}, R^{α3}/R^{α4}, R^{α5}/R^{α6}, R^{α7}/R^{α8} -SO₂ (CH₂) ₄O (2-chloro-4-t-amylphenyl) | Cu |
| (16) | R^{α1}/R^{α2}, R^{α3}/R^{α4}, R^{α5}/R^{α6}, R^{α7}/R^{α8} -SO₂ (CH₂) ₂CO₂C₄H₉-*i* | Pd |
| (17) | R^{α1}/R^{α2}, R^{α3}/R^{α4}, R^{α5}/R^{α6}, R^{α7}/R^{α8} -SO₂ (cyclohexyl) | Cu |
| (18) | R^{α1}/R^{α2}, R^{α3}/R^{α4}, R^{α5}/R^{α6}, R^{α7}/R^{α8} -SO₂ {4-(2-s-butoxybenzoylamino)phenyl} | Ni |
| (19) | R^{α1}/R^{α2}, R^{α3}/R^{α4}, R^{α5}/R^{α6} -SO₂ (2,6-dichloro-4-methoxyphenyl) | Pd |
| (20) | R^{α1}/R^{α2}, R^{α3}/R^{α4}, R^{α5}/R^{α6}-SO₂CH (CH₃) {CO₂CH₂-CH (C₂H₅) C₄H₉-*n*} | Mg |
| (21) | R^{α1}/R^{α2}, R^{α3}/R^{α4}, R^{α5}/R^{α6}, R^{α7}/R^{α8} -SO₂ {2-(2-ethoxyethoxy)-phenyl} R^{β1}/R^{β2}, R^{β3}/R^{β4}, R^{β5}/R^{β6}, R^{β7}/R^{β8} -C₂H₅ | Zn |
| (2 2) | R^{α1}/R^{α2}, R^{α3}/R^{α4}, R^{α5}/R^{α6}, R^{α7}/R^{α8} -SO₂N {CH₂CH₂O (CH₃) } ₂ | Cu |

**Table 3**

| No. | Substituents and Position thereof | M |
|---|---|---|
| (23) | R^{α1}/R^{α2}, R^{α3}/R^{α4}, R^{α5}/R^{α6}, R^{α7}/R^{α8} - OCH₂CH (C₂H₅) (C₄H₉-*n*) | N i |
| (24) | R^{α1}/R^{α2}, R^{α3}/R^{α4}, R^{α5}/R^{α6}, R^{α7}/R^{α8} -OCH (CH₃) (phenyl) | Zn |
| (25) | R^{α1}, R^{α2}, R^{α3}, R^{α4}, R^{α5}, R^{α6}, R^{α7}, R^{α8} -OCH (s-butyl) ₂ | Cu |
| (26) | R^{α1}, R^{α2}, R^{α3}, R^{α4}, R^{α5}, R^{α6}, R^{α7}, R^{α} SiCl₂ -OCH₂CH₂OC₃H₇- *i* | |
| (27) | R^{α1}/R^{α2}, R^{α3}/R^{α4}, R^{α5}/R^{α6}, R^{α7}/R^{α8} - t-amyl R^{β1}/R^{β2}, R^{β3}/R^{β4}, R^{β5}/R^{β6}, R^{β7}/R^{β8} -Cl | Ni |
| (28) | R^{α1}/R^{α2}, R^{α3}/R^{α4}, R^{α5}/R^{α6}, R^{α7}/R^{α8} - 2,6-di-ethoxyphenyl | Zn |
| (29) | R^{α1}/R^{α2}, R^{α3}/R^{α4}, R^{α5}/R^{α6} -SO₂NHCH₂CH₂OC₃H₇- *i* R^{α7}/R^{α8} -SO₃H | Cu |
| (30) | R^{α1}/R^{α2}, R^{α3}/R^{α4}, R^{α5}/R^{α6} -CO₂CH₂CH₂OC₂H₅ R^{α7}/R^{α8} -CO₂H | Cu |
| (31) | R^{α1}/R^{α2}, R^{α3}/R^{α4}, R^{α5}/R^{α6}, R^{α7}/R^{α8} -CO₂CH (CH₃) (CO₂C₃H₇- *i*) | Co |
| (32) | R^{α1}/R^{α2}, R^{α3}/R^{α4}, R^{α5}/R^{α6}, R^{α7}/R^{α8} -CONHCH₂CH₂OC₃H₇- *i* | Cu |

**Table 4**

| No. | Substituents and Position thereof | M |
|---|---|---|
| (33) | R^{α1}/R^{α2}, R^{α3}/R^{α4}, R^{α5}/R^{α6} - CON (CH₂CH₂OC₄H₉-*n*) ₂ R^{α7}/R^{α8} - CO₂H | Pd |
| (34) | R^{α1}/R^{α2}, R^{α3}/R^{α4}, R^{α5}/R^{α6}, R^{α7}/R^{α8} - NHCOCH (C₂H₅) (C₄H₉-*n*) | Co |
| (35) | R^{α1}/R^{α2}, R^{α3}/R^{α4}, R^{α5}/R^{α6}, R^{α7}/R^{α8}-NHCO (2-n-butoxycarbonylphenyl) | Mg |
| (36) | R^{α1}/R^{α2}, R^{α3}/R^{α4}, R^{α5}/R^{α6}, R^{α7}/R^{α8} -NHSO₂ (2-i-propoxyphenyl) | Pd |
| (37) | R^{α1}/R^{α2}, R^{α3}/R^{α4}, R^{α5}/R^{α6}, R^{α7}/R^{α8} -NHSO₂ (2-n-butoxy-5-t-amylphenyl) | Zn |
| (38) | R^{α1}/R^{α2}, R^{α3}/R^{α4}, R^{α5}/R^{α6}, R^{α7}/R^{α8} -SO₂CH₃ | Ni |
| (39) | R^{α1}/R^{α2}, R^{α3}/R^{α4}, R^{α5}/R^{α6}, R^{α7}/R^{α8} - SO₂CH (CH₃) ₂ | Cu |
| (40) | R^{α1}/R^{α2}, R^{α3}/R^{α4}, R^{α5}/R^{α6}, R^{α7}/R^{α8} - SO₂C₄H₉ - *s* | Zn |
| (41) | R^{α1}/R^{α2}, R^{α3}/R^{α4}, R^{α5}/R^{α6}, R^{α7}/R^{α8} - SO₂CH₂CO₂CH (CH₃) ₂ | Cu |
| (42) | R^{α1}/R^{α2}, R^{α3}/R^{α4}, R^{α5}/R^{α6}, R^{α7}/R^{α8} - SO₂CH (CH₃) (CO₂CH₃) | Cu |
| (43) | R^{α1}/R^{α2}, R^{α3}/R^{α4}, R^{α5}/R^{α6}, R^{α7}/R^{α8} - SO₂C₆H₅ | Cu |
| (44) | R^{α1}/R^{α2}, R^{α3}/R^{α4}, R^{α5}/R^{α6}, R^{α7}/R^{α8} - SO₂N (C₅H₁₁-*i*) ₂ | Cu |

**Table 5**

| No. | Substituents and Position thereof | M |
|---|---|---|
| (45) | R^{α1}/R^{α2}, R^{α3}/R^{α4}, R^{α5}/R^{α6}, R^{α7}/R^{α8} - SO₂C₄H₉-s | Cu |
| (46) | R^{α1}/R^{α2}, R^{α3}/R^{α4}, R^{α5}/R^{α6}, R^{α7}/R^{α8} -SO₂C (CH₃)₃ | Cu |
| (47) | R^{α1}/R^{α2}, R^{α3}/R^{α4}, R^{α5}/R^{α6}, R^{α7}/R^{α8} -SO₂C (CH₃) ₂ {CH₂C (CH₃) ₃} | Cu |
| (48) | R^{α1}/R^{α2}, R^{α3}/R^{α4}, R^{α5}/R^{α6}, R^{α7}/R^{α8} -SO₂C (CH₃) ₂ (CO₂C₂H₅) | Cu |
| (49) | R^{α1}/R^{α2}, R^{α3}/R^{α4}, R^{α5}/R^{α6}, R^{α7}/R^{α8} -SO₂C (CH₃) ₂ (OCH₃) | Cu |
| (50) | R^{α1}/R^{α2}, R^{α3}/R^{α4}, R^{α5}/R^{α6}, R^{α7}/R^{α8} -SO₂C (CH₃) ₂ (CN) | Cu |
| (51) | R^{α1}/R^{α2}, R^{α3}/R^{α4}, R^{α5}/R^{α6}, R^{α7}/R^{α8} - SO₂CF₂CF₂CF₃ | Cu |
| (52) | R^{α1}/R^{α2}, R^{α3}/R^{α4}, R^{α5}/R^{α6}, R^{α7}/R^{α8} -SO₂C (CH₃) ₂ {CH₂CH₂CO₂ (phenyl) } | Cu |
| (53) | R^{α1}/R^{α2}, R^{α3}/R^{α4}, R^{α5}/R^{α6}, R^{α7}/R^{α8} -SO₂C (CH₃) ₂ {CO (phenyl) } | Cu |
| (54) | R^{α1}/R^{α2}, R^{α3}/R^{α4}, R^{α5}/R^{α6}, R^{α7}/R^{α8} -SO₂C (CH₃) ₂ (CH₂CH₃) | Cu |
| (55) | R^{α1}/R^{α2}, R^{α3}/R^{α4}, R^{α5}/R^{α6}, R^{α7}/R^{α8} -SO₂C (CH₃) ₃ | Pd |
| (56) | R^{α1}/R^{α2}, R^{α3}/R^{α4}, R^{α5}/R^{α6}, R^{α7}/R^{α8} SiCl₂-SO₂C (CH₃) ₃ | |
| (57) | R^{α1}/R^{α2}, R^{α3}/R^{α4}, R^{α5}/R^{α6}, R^{α7}/R^{α8} -SO₂C (CH₃) ₂ (CO₂C₂H₅) | N i |

**Table 6**

| No. | Substituents and Position thereof | M |
|---|---|---|
| (58) | R^{β1}/R^{β2}, R^{β3}/R^{β4}, R^{β5}/R^{β6}, R^{β7}/R^{β8} -SO₂C (CH₃) ₃ | Cu |
| (59) | R^{α1}/R^{α2}, R^{α3}/R^{α4}, R^{α5}/R^{α6}, R^{α7}/R^{α8} - SO₂C (CH₃) ₃ R^{β1}/R^{β2}, R^{β3}/R^{β4}, R^{β5}/R^{β6}, R^{β7}/R^{β8} - Br | Cu |
| (60) | R^{α1}/R^{α2}, R^{α3}/R^{α4}, R^{α5}/R^{α6}, R^{α7}/R^{α8} R^{β1}/R^{β2}, R^{β3}/R^{β4}, R^{β5}/R^{β6}, R^{β7}/R^{β8} - SO₂C (CH₃) ₃ | Cu |
| (61) | R^{α1}/R^{α2}, R^{α3}/R^{α4}, R^{α5}/R^{α6}, R^{α7}/R^{α8} - S O ₂ C (1-methylcyclohexyl) ₃ | Cu |
| (62) | R^{α1}/R^{α2}, R^{α3}/R^{α4}, R^{α5}/R^{α6}, R^{α7}/R^{α8} -SO₂C(CH₃) ₃ | V=0 |
| (63) | R^{α1}/R^{α2}, R^{α3}/R^{α4}, R^{α5}/R^{α6}, R^{α7}/R^{α8} -SO₂C-(CH₃) ₃ | Co |
| (64) | R^{α1}/R^{α2}, R^{α3}/R^{α4}, R^{α5}/R^{α6}, R^{α7}/R^{α8} -SO₂C (CH₃) ₃ | Mg |
| (65) | R^{α1}/R^{α2}, R^{α3}/R^{α4}, R^{α5}/R^{α6}, R^{α7}/R^{α8} -SO₂C (CH₃) ₃ | Al |
| (66) | R^{α1}/R^{α2}, R^{α3}/R^{α4}, R^{α5}/R^{α6}, R^{α7}/R^{α8} -SO₂C(CH₃) ₃ | Zn |
| (67) | R^{α1}/R^{α2}, R^{α3}/R^{α4}, R^{α5}/R^{α6}, R^{α7}/R^{α8} - OCH {CH (CH₃) ₂}₂ | Cu |
| (68) | R^{α1}/R^{α2}, R^{α3}/R^{α4}, R^{α5}/R^{α6}, R^{α7}/R^{α8} - OCH {CH (CH₃) ₂} ₂ R^{α1}/R^{α2}, R^{α3}/R^{α4}, R^{α5}/R^{α6}, R^{α7}/R^{α8} -Br | Cu |

**Table 7**

| No. | Substituents and Position thereof | M |
|---|---|---|
| (6 9) | R^{α1}/R^{α2}, R^{α3}/R^{α4}, R^{α5}/R^{α6}, R^{α7}/R^{α8} - OCH {CH (CH₃) ₂} ₂ | Pd |
| (70) | R^{α1}/R^{α2}, R^{α3}/R^{α4}, R^{α5}/R^{α6} -SO₂C(CH₃) ₃ R^{α7}/R^{α8} - OCH {CH (CH₃) ₂} ₂ | Cu |
| (71) | R^{α1}/R^{α2}, R^{α3}/R^{α4}, R^{α5}/R^{α6} -SO₂C(CH₃) ₃ R^{α7}/R^{α8} - OCH {CH (CH₃) ₂} ₂ R^{α7}/R^{α8} - Br | Cu |

The phthalocyanine dye represented by formula (I) and used in the dye recording layer of the invention may be used singly or a mixture of several derivatives having different structures. In order to prevent crystallization of the recording layer, it is preferable to use a mixture of isomers whose substituents have different substitution positions.

The dye recording layer may be formed in the following manner: dissolving the above dye and, as desired, a binder in a suitable solvent to prepare a coating solution, applying the resultant solution to the surface of the above substrate or the surface of the light-reflective layer to provide a coating layer, followed by drying. Various additives such as an antioxidant, a UV absorber, a plasticizer and a lubricant may be incorporated in the coating solution depending on the purposes.

As a method of dissolving the dye and the binder in the solvent, a supersonic wave, a homogenizer, a disperser, a sand mill or a stirrer may be employed.

Examples of the solvent used for preparing the coating solution for the dye recording layer include esters such as a butyl acetate and a cellosolve acetate; ketones such as a methyl ethyl ketone, a cyclohexanone and a methyl isobutyl ketone; chlorinated hydrocarbons such as a dichloromethane, a 1,2-dichloroethane and a chloroform; amides such as a dimethylformamide; hydrocarbons such as a cyclohexane; ethers such as a tetrahydrofuran, an ethyl ether and a dioxane; alcohols such as an ethanol, an n-propanol, an isopropanol, an n-butanol and a diacetone alcohol; fluorine type solvents such as 2,2,3,3-tetrafluoropropanol; and glycol ethers such as an ethylene glycol monomethyl ether, an ethylene glycol monoethyl ether and a propylene glycol monomethyl ether. These solvents may be used either singly or in combination of two or more kinds thereof, in consideration of solubility of the dye and the binder used.

Examples of the binder may include naturally occurring organic high-molecular materials such as a gelatin, a cellulose derivative, a dextran, a rosin and a rubber; and synthetic organic polymers such as hydrocarbon type resins, e.g., a polyurethane, a polyethylene, a polypropylene, a polystyrene and a polyisobutylene, vinyl type resins, e.g., a polyvinyl chloride, a polyvinylidene chloride, a polyvinyl chloride/polyvinyl acetate copolymer, acrylic resins, e.g., a methyl polyacrylate and a methyl polymethacrylate, and pre-condensates of heat-curable resins, e.g. a polyvinyl alcohol, a polyethylene chloride, an epoxy resin, a butyral resin, a rubber derivative and phenol formaldehyde resins. When used together with the dye recording material in the recording layer, the binder is generally added preferably in an amount ranging from 0.01 to 50 times (by mass ratio), and more preferably in a range from 0.1 to 5 times, relative to the recording material. It is possible to further improve storability of the dye recording layer by incorporating the binder in the dye recording layer.

The concentration of a recording material in the coating solution prepared in this manner is generally in a range from 0.01 to 15% by mass, preferably in a range from 0.1 to 10% by mass, more preferably 0.5 to 5% by mass, and most preferably 0.5 to 3% by mass in the case of the optical information recording medium according to the first aspect. The concentration of a recording material in the coating solution is generally in a range from 0.01 to 10% by mass, and preferably in a range from 0.1 to 5% by mass, in the case of the non-recorded optical information recording medium for use in the optical information recording method according to the second aspect.

Examples of the coating method include spraying, spin coating, dip coating, roll coating, blade coating, doctor rolling and screen printing. The dye recording layer may be a monolayer or multilayer. A layer thickness of the dye recording layer is generally in a range from 20 to 500 nm, preferably in a range from 30 to 300 nm, and more preferably in a range from 50 to 100 nm.

A coating temperature is generally from 23 to 50°C, preferably from 24 to 40°C, and more preferably from 25 to 37°C.

The dye recording layer may further contain various anti-fading agents in order to improve light resistance of the dye recording layer.

As the anti-fading agent, a singlet oxygen quencher is ordinarily used. As the singlet oxygen quencher, those described in publications such as already known patent specifications may be utilized.

Specific examples of the anti-fading agent include those described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 4-25492, Japanese Patent Application Publication (JP-B) Nos. 1-38680 and 6-26028, the specification of German Patent No. 350399 and the *Journal of the Chemical Society of Japan*, October issue (1992), page 1141.

The anti-fading agent such as the singlet oxygen quencher is generally contained in a range from 0.1 to 50% by mass, preferably in a range from 0.5 to 45% by mass, more preferably in a range from 3 to 40% by mass, and particularly preferably 5 to 25% by mass, relative to a total solid content in the dye recording layer.

### Barrier Layer

A barrier layer may be disposed on the surface of the formed dye recording layer to improve adhesion to the cover layer and storability of the dye. The barrier layer can also prevent diffusion of water and organic components to the recording layer.

Any material may be used as the material for constituting the barrier layer insofar as it transmits laser light, however, dielectrics are preferably used. Examples of the dielectrics include oxides, nitrides, carbides and sulfides of at least one atom selected from Zn, Si, Ti, Te, Sm, Mo and Ge. More specifically, ZnS, TiO₂, SiO₂, GeO₂, Si₃N₄, Ge₃N₄ or MgF₂ is preferably used. Also, the barrier layer may be made of a hybrid material such as ZnS-SiO₂. The barrier layer may be formed by sputtering, vapor depositing, or ion plating the above material, and a thickness of the barrier layer preferably ranges from 1 to 100 nm.

### Transparent Sheet or Cover Layer

The transparent sheet (which corresponds to the cover layer of the non-recorded optical information recording medium for use in the optical information recording method according to the second or third aspect) constituting the optical information recording medium according to the first aspect of the invention is formed on a surface of the dye recording layer side via an adhesive layer or a pressure sensitive adhesive layer (using an adhesive or a pressure sensitive adhesive). This transparent sheet is formed to protect the inside of the optical information recording medium from impact, etc.

Any material may be used as the transparent sheet insofar as it is transparent, and the transparent sheet is preferably made of polycarbonate or cellulose triacetate, and more preferably made of a material having a moisture absorption coefficient of 5% or less at 23°C and 50% RH. As used herein, the term "transparent" means that a subject material is transparent enough to transmit light (transmittance: 90% or more) with respect to recording light and reproducing light.

The transparent sheet may be disposed, for example, in the following manner. A photo-curable resin is dissolved in a suitable solvent to prepare a coating solution, which is then applied onto the barrier layer at a predetermined temperature to form a coated film. A cellulose triacetate film (TAC film) obtained by extrusion of a plastic is laminated on the above coated film and light is irradiated over the laminated TAC film to cure the coated film, whereby the transparent sheet is formed. The TAC film preferably contains a UV absorber. A thickness of the transparent sheet is in a range of from 0.01 to 0.2 mm, preferably in a range of from 0.03 to 0.1 mm, and more preferably in a range of from 0.05 to 0.095 mm.

As the transparent sheet, a polycarbonate sheet or the like may also be used.

A coating temperature preferably ranges from 23 to 50°C, more preferably in a range from 24 to 40°C, and still more preferably in a range from 25 to 37°C, for the purpose of controlling viscosity.

The coated film is preferably irradiated with ultraviolet rays using a pulse-type irradiator (preferably, UV irradiator) to prevent warping of a disk. A pulse interval is preferably in the order of msec or less, and more preferably in the order of µsec or less. The amount of irradiated light per pulse is preferably below 3 kW/cm², and more preferably below 2 kW/cm².

The number of light irradiation performed is preferably 20 times or less, and more preferably 10 times or less, without any particular limitation.

In case where the transparent sheet has already been provided using the pressure sensitive adhesive on the surface, use of the above adhesive may be obviated.

The cover layer (which corresponds to the above transparent sheet and constitutes a non-recorded optical information recording medium and is used in the optical information recording method according to the second aspect or third aspect) preferably has a transmittance over 80%, and more preferably over 90% with respect to laser light used for recording and reproducing information. The cover layer is preferably a resin sheet having a surface roughness Ra of 5 nm or less. Examples of the material used for the resin sheet include polycarbonate (PURE ACE manufactured by Teijin Limited, and PANLITE manufactured by Teijin Chemicals Ltd.), cellulose triacetate (FUJITAC, manufactured by Fuji Photo Film Co., Ltd.) and PET (LUMIRROR, manufactured by Toray Industries Inc.), and polycarbonate or cellulose triacetate is preferably used. A surface roughness Ra of the cover layer is determined depending on a type of the resin, a film-forming method and the presence or absence of a filler to be contained. The surface roughness Ra of the cover layer is measured by, for example, HD2000 manufactured by WYKO.

A thickness of the cover layer is preferably in a range of from 0.03 to 0.15 mm, and more preferably in a range of from 0.05 to 0.12 mm, properly varies depending on a wavelength of laser light applied for recording and reproducing information and an NA. A total thickness of the cover layer and the adhesive layer or the pressure sensitive adhesive layer is preferably 0.09 to 0.11 mm, and more preferably 0.095 to 0.105 mm.

Since the adhesive layer or pressure sensitive adhesive layer disposed when the cover layer is used has softness, the layer itself deforms to exert an ability not to prevent formation of a void when the void is formed by heat generated at the recording pit portion in the dye recording layer during recording.

Hereinafter, a relation between formation of the void (pit) and deformation of the adhesive layer or pressure sensitive adhesive layer will be explained with reference to Fig. 2. Fig. 2 is a schematic sectional view of the major part when the optical information recording medium in which the void has been formed is cut along the direction of the axis of the recording medium. The optical information recording medium shown in Fig. 2 is provided with an optical reflecting layer 20, a dye recording layer 30, a barrier layer 40 and a pressure sensitive adhesive layer (or adhesive layer) 50 formed in this order on a substrate 10. Further, a cover layer (not shown) is disposed on the pressure sensitive adhesive layer 50.

When laser light is irradiated onto a signal pit portion of the dye recording layer in the optical information recording medium having a structure as shown in Fig. 2, the dye recording layer 30 at the region (recording pit portion) formed with a void 60 forces the barrier layer 40 downwards in Fig. 2 to cause the highly soft pressure sensitive adhesive layer 50 to concavely deform. It is considered that since the pressure sensitive adhesive layer (or adhesive layer) has an ability not to prevent formation of the void, a good pit is formed and hence the recording and reproducing characteristics may be stabilized.

The adhesive used in the adhesive layer has a glass transition temperature (Tg) of preferably 80°C or less, more preferably 30°C or less, and still more preferably 0°C or less in order to impart softness above a certain level to the adhesive layer. The glass transition temperature of the adhesive means a glass transition temperature of the adhesive after it has been cured.

In order to impart softness above a certain level to the pressure sensitive adhesive layer, the glass transition temperature (Tg) and crosslinked density of the pressure sensitive adhesive used in the pressure sensitive adhesive layer are preferably adjusted such that hardness of the pressure sensitive adhesive layer can be controlled.

In addition to the foregoing adhesive and pressure sensitive adhesive, an elastomer or the like may be used insofar as it has an ability to adsorb the cover layer.

It is preferable to use, for example, a UV-curable resin, EB-curable resin or heat-curable resin as the adhesive, with a UV-curable resin being particularly preferable.

Although no particular limitation is imposed on a method for providing an adhesive layer, for example, the following method may be adopted: applying a predetermined amount of the adhesive to the surface of the dye recording layer side, providing the cover layer and thereafter uniformly spreading the adhesive between a laminate and the cover layer, followed by curing.

An amount of the adhesive to be applied is controlled such that a thickness of the adhesive layer finally formed ranges from 0.1 to 100 µm, preferably ranges from 0.5 to 50 µm, and more preferably ranges from 10 to 30 µm.

When a UV-curable resin is used as the adhesive, the UV-curable adhesive may be used as it is or dissolved in a suitable solvent such as methyl ethyl ketone or ethyl acetate to prepare a coating solution, which is then supplied from a dispenser to the surface of the laminate or the cover layer. The UV-curable resin to be used preferably has a small cure shrinkage to prevent warping of a produced optical information recording medium. Examples of such a UV-curable resin include UV-curable resins such as "SD-640" manufactured by Dainippon Ink and Chemicals, Inc.

As the pressure sensitive adhesive, an acryl type pressure sensitive adhesive is used in view of transparency and resistance. The acryl type, rubber type or silicone type adhesives may preferably be used. As such an acryl type pressure sensitive adhesive, adhesives which contain a 2-ethylhexylacrylate, an n-butylacrylate or the like as a major component and further a compound obtained by polymerizing a short-chain alkylacrylate or a methacrylate, e.g., a methylacrylate, an ethylacrylate or a methylmethacrylate with an acrylic acid, a methacrylic acid, an acrylamide derivative, a maleic acid, a hydroxylethylacrylate, a glycidylacrylate or the like which can form a crosslinking site with a crosslinking agent to improve a cohesive force are preferably used. The glass transition temperature (Tg) and crosslinked density may be varied by properly adjusting mixing ratios and types of the major component, short-chain component and the component for forming a crosslinked site.

Examples of the crosslinking agent used in combination with the above pressure sensitive adhesive include isocyanate type crosslinking agents. As such an isocyanate type crosslinking agent, isocyanates such as a tolylenediisocyanate, a 4,4'-diphenylmethanediisocyanate, a hexamethylenediisocyanate, a xylylenediisocyanate, a naphthylene-1,5-diisocyanate, an o-toluidineisocyanate, an isophoronediisocyanate and a triphenylmethanetriisocyanate, products of these isocyanates and polyalcohols or polyisocyanates produced by condensation of isocyanates may be used. Examples of commercially available products of these isocyanates include Coronate L, Colonate HL, Colonate 2030, Colonate 2031, Millionate MR and Millionate HTL manufactured by Nippon Polyurethane Industry Co., Ltd.; Takenate D-102, Takenate D-110N, Takenate D-200 and Takenate D-202 manufactured by Takeda Chemical Industries, Ltd.; and Desmodule L, Desmodule IL, Desmodule N and Desmodule HL manufactured by Sumitomo Bier Urethane Co., Ltd.

The pressure sensitive adhesive may be cured either after it is applied uniformly in a predetermined amount to the surface of the dye recording layer side and laminated with the cover layer, followed by curing, or after it is uniformly applied in a predetermined amount to the surface of the cover layer which is in contact with the dye recording layer side and laminated with the dye recording layer side of the disk type laminate, followed by curing.

As the cover layer, a commercially available pressure sensitive adhesive film which has already been provided with a pressure sensitive adhesive layer may also be used.

### Other Layers

The optical information recording medium of the invention may further be provided with various intermediate layers in addition to the aforementioned optional layers. For example, intermediate layers for improving reflectance and adhesion may be disposed between the light-reflective layer and the dye recording layer.

### <Optical Information Recording Method>

Hereinafter, a preferred embodiment of a method of recording information on and a method of reproducing the recorded information from a preferred embodiment of the optical information recording medium will be explained.
(1) Recording of information on the optical information recording medium according to the first aspect is carried out, for example, in the following manner.
   First, recording laser light having a wavelength of 500 nm or less (preferably 400 to 440 nm) is irradiated from the transparent sheet side, with rotating the optical information recording medium at a constant linear velocity. Irradiation with laser light makes the recording layer absorb the light to cause a temperature rise locally, whereby a physical or chemical change (e.g., formation of pits) occurs, resulting in a change in optical characteristics of the recording layer. Information is recorded by this change occurred in the optical characteristics.
   Examples of a laser light source having an oscillation wavelength of 500 nm or less include a blue-violet semiconductor laser having an oscillation wavelength ranging from 390 to 415 nm and a blue-violet SHG laser having a central oscillation wavelength of about 430 nm.
   A numerical aperture (NA) of an object lens used for pick-up is preferably 0.7 or more, and more preferably 0.80 or more, for the purpose of increasing recording density.
   On the other hand, the recorded information is reproduced by irradiating laser light having the same as or shorter than that of the laser used for recording information from the transparent sheet side, with rotating the optical information recording medium at the same constant linear velocity as above to detect the reflected light.
(2) The optical information recording method according to the second aspect of the invention is an optical information recording method in which the aforementioned non-recorded optical information recording medium is irradiated with laser light from the cover layer side to form a void in a signal pit portion in the dye recording layer to thereby carry out recording, wherein a pulse width and/or power of the laser light is controlled such that the width of the void falls within a range of from 50 to 250 nm. The lower limit of the width of the void is more preferably 100 nm or more, and still more preferably 150 nm or more. Also, the upper limit of the width of the void is more preferably 230 nm or less, and still more preferably 220 nm or less.
   As used herein, the term "a width of the void" refers to a maximum value (average) of the width of the void in the width direction of the groove. This void has, for instance, a spherical form or soybean form. The maximum value of the width of the void means the width of the region where the void is most widely expanded in the width direction of the groove.
   With regard to a measuring method, first the cover layer is peeled off from the optical information recording medium, on which information has been recorded at the border of the dye recording layer. By this peeling, the dye recording layer is divided into a part left on the substrate side and a part adhering to the cover layer side. Then, the void formed in the dye recording layer left on the substrate side is observed using an electron microscope so as to measure the maximum value of the width of the void employed in the invention. In order to find the average of the maximum value, preferably about 10 to 1000, and more preferably about 50 to 2000 of the voids formed in the same conditions are measured.
(3) The optical information recording method according to the third aspect of the invention is an optical information recording method in which the aforementioned non-recorded optical information recording medium is irradiated with laser light from the cover layer side to form a void at a signal pit portion in the dye recording layer to thereby carry out recording, wherein a pulse width and/or power of laser light is controlled such that a proportion of the height of the above void to a thickness of the above dye recording layer falls within a range of 20 to 95%. The lower limit of the proportion of the height of the void is more preferably 40% or more, and still more preferably 60% or more. Also, the upper limit of the proportion of the height of the void is more preferably 90% or less, and still more preferably 85% or less.

As used herein, the term "a proportion of the height of the void" refers to a proportion of the maximum value of the height of the void in the direction of the thickness of the dye recording layer to the layer thickness in the same direction. The maximum value of the height of the void refers to a height of the region where the void is most widely expanded in the direction of the thickness of the dye recording layer. In more detail, as illustrated as an example in Fig. 2, the proportion of the maximum value of the height of the void indicates the proportion of the maximum value T₆₀ of the height of the void 60 to the thickness (including the void 60) T₃₀ of the dye recording layer of the region (signal pit portion) where the void 60 is formed.

As a method of measuring the maximum value of the height of the void, a method is employed in which the optical information recording medium is cut to expose the section of the dye recording layer formed with voids (section along the direction of the axis of the optical information recording medium) using a FIB (Forced Ion Beam) and the section is observed using an electron microscope to measure the maximum value. Since a region where a void is most widely expanded cannot always be cut using this method, a predetermined number (e.g., about 10 to 1000, and preferably about 50 to 200) of voids formed in the same conditions are cut to find the region where a void is most widely expanded (the maximum value of the height of the void). Next, a thickness of the dye recording layer (including the void) in the same section is measured to calculate the proportion of the height of the void to the thickness of the dye recording layer.

The optical information recording methods according to the second and third aspects of the invention are specifically carried out, for example, in the following manner. First, the non-recorded optical information recording medium is irradiated with recording light such as blue-violet laser light (e.g., wavelength: 405 nm) from the cover layer side through an object lens, with rotating the recording medium at a predetermined linear velocity (2 to 60 m/sec) or at a predetermined constant angular velocity. This light irradiation renders the dye recording layer to absorb light to thereby cause a temperature rise in the dye recording layer locally, leading to formation of a desired void (pit). As a result, optical characteristics of the dye recording layer is altered, whereby information is recorded on the medium.

Examples of the laser light source include a blue-violet semiconductor laser having an oscillation wavelength ranging from 390 to 415 nm and a blue-violet SHG laser having a central oscillation wavelength of about 425 nm. If the following outputting conditions regarding at least one of the pulse width and power of laser light are employed, the aforementioned void can be formed.

A waveform of the recording laser light may be either a pulse series or one pulse. The ratio relative to an actually to be recorded length (length of a pit) is important.

The pulse width of the laser light is preferably in a range of from 20 to 95%, more preferably in a range of from 30 to 90%, and still more preferably in a range of from 35 to 85%, relative to the actually to be recorded length. Incidentally, when the waveform for recording is a pulse series, the above definition implies that a sum of the pulse series falls within the above range.

When the pulse width exceeds 95%, a formed pit (void) becomes excessively large and an intended reproducing pulse width becomes too long, which may lead to a deterioration in jitter characteristics.

When the pulse width is less than 20%, a formed pit (void) becomes excessively small and the intended reproducing pulse width becomes excessively shorter, which may lead to a deterioration in jitter characteristics.

When recording is based on a pulse duration modulation, the proportion of the pulse width varies depending on the actually to be recorded length. In order to perform sufficient recording (formation of pits), the proportion of the pulse width of at least a part of the pulses preferably falls within the above range.

The power of the laser light is preferably in a range of from 2 to 12 mW, more preferably in a range of from 3 to 10 mW, and still more preferably of from 4 to 8 mW when the linear velocity is 5 ± 0.5 m/s, although it varies depending on the recording linear velocity. When the linear velocity is doubled, a preferable range of the power of the laser light is increased by a factor of 2.5.

When the power exceeds 12 mW, a formed pit (void) becomes excessively large to sometimes cause an increase in crosstalk and jitter characteristcs.

On the other hand, when the power is smaller than 2 mW, there arises a case where no sufficient reproducing signal amplitude is obtained or a jitter is increased.

Regarding other conditions of the laser light, a lower limit of rim intensity is preferably 40% or more, and more preferably 50% or more. Meanwhile, an upper limit of rim intensity is preferably 80% or less, and more preferably 70% or less. If rim intensity is less than 40%, there arises a case where the jitter is increased, whereas rim intensity exceeds 80%, there arises a case where laser power is insufficient.

The NA of the object lens used for pick-up is preferably 0.7 or more, and more preferably 0.85 or more, in order to increase recording density.

The optical information recording medium on which information has been recorded by the optical information recording method, according to the second or third aspect of the invention, exhibits superior and stable recording and reproducing characteristics because excellent voids (pits) are formed.

The optical information recording medium on which information has been recorded by the optical information recording method of the invention (the optical information recording medium of the invention) can reproduce information by irradiating the medium with a blue-violet laser light from the cover layer side, with rotating the medium at a predetermined constant linear velocity to detect the reflected light.

### EXAMPLES

The present invention will now be explained in more detail by way of examples, which, however, are not intended to be limiting of the invention.

### (Example 1)

The grooved side of a polycarbonate resin substrate, which was obtained by injection molding, was DC-sputtered using CUBE (manufactured by Unaxis) in an argon atmosphere to form a light-reflective layer of Ag (thickness: 100 nm). A layer thickness was adjusted by controlling a sputtering time.

The resulting substrate had a thickness of 1.1 mm, an outside diameter of 120 mm and an inside diameter of 15 mm, and had a spiral groove (groove depth (a height of the on-groove): 34 nm, width (a width of the on-groove: 105 nm and track pitch: 320 nm)). An inclination angle of the groove as measured by AFM was 57°.

2 g of a dye represented by the following chemical formula (wherein Rn represents α-SO₂C₄H₉; and M represents Cu) was dissolved in 100 ml of 2,2,3,3-tetrafluoropropanol to prepare a dye coating solution. The prepared dye coating solution was spin-coated on the light-reflective layer, by varying rotational frequency from 300 to 4,000 rpm under the conditions of 23°C and 50% RH. Thereafter, the substrate was kept at 23°C and 50% RH for one hour to thereby form a recording layer (a thickness in the groove (in-groove portion): 140 nm and a thickness in the land portion (on-groove portion): 110 nm).

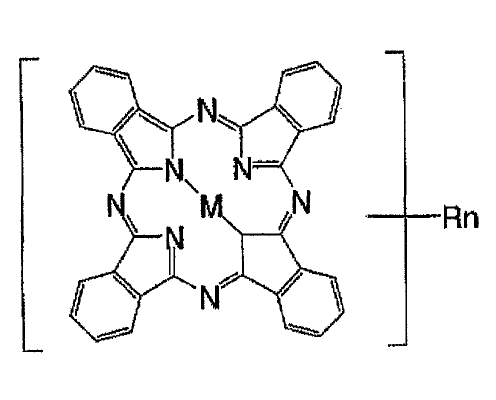

After the recording layer was formed, the resultant substrate was subjected to annealing treatment in a clean oven. The annealing treatment was carried out by supporting the substrate by a vertical stack pole via a spacer, with maintaining the substrate at 80°C for one hour.

Then, the recording layer was RF-sputtered with ZnS/SiO₂ (ZnS:SiO₂ = 8:2 (by mass)) to form a barrier layer (thickness: 5 nm) thereon. Formation of the barrier layer was carried out employing the following conditions.
Power: 4 kW
Pressure: 2 × 10⁻² hPa
Time: 2 seconds

A polycarbonate transparent sheet provided with a pressure sensitive adhesive on the laminating surface was adhered onto the barrier layer to thus produce an optical information recording medium.

A total thickness of the transparent sheet and a layer made of the pressure sensitive adhesive in the produced optical information recording medium was about 100 µm.

### (Comparative Example 1)

An optical information recording medium was produced in the same manner as in the above Example, except that the groove width (a width of the on-groove) of the groove formed on the substrate was 165 nm.

The produced optical information recording media of Example 1 and Comparative Example 1, respectively, were evaluated for jitter of the multi-track in order to assess the recording and reproducing characteristics. Evaluation of jitter was carried out using an apparatus DDU1000 (manufactured by Pulsetec Industrial Co., Ltd., NA: 0.85, wavelength: 403 nm) and MSG2 (manufactured by Pulsetec Industrial Co., Ltd.) for producing signals, at a clock frequency of 66 MHz, a linear velocity of 5.4 m/s and a reproducing power of 0.4 mW.

The optical information recording medium of Example 1 had a jitter of 9.9%, whereas the optical information recording medium of Comparative Example 1 had a jitter of 11%.

### (Example 2)

### <Production of Optical Information Recording Medium>

The grooved side of a spirally grooved substrate made of polycarbonate (Panlite AD5503, manufactured by Teijin Limited), which was obtained by injection molding and which had a groove depth of 40nm, a width of 150 nm and a track pitch of 340 nm and had a thickness of 1.1 mm, an outside diameter of 120 nm and an inside diameter of 15 mm, was DC-sputtered in an argon atmosphere to form a light-reflective layer of AgPdDu alloy (thickness: 120 nm).

2.5 g of a dye A (n = 1.88, k = 0.042) represented by the following chemical formula was dissolved in 100 ml of 2,2,3,3-tetrafluoropropanol to prepare a dye coating solution. The prepared dye coating solution was spin-coated on the light-reflective layer by varying rotational frequency from 300 to 4,000 rpm under the conditions of 23°C and 50% RH. Thereafter, the substrate was kept at 23°C and 50% RH for one hour to form a dye recording layer (a thickness of the in-groove portion: 120 nm and a thickness of the on-groove portion: 120 nm).

By cutting the dye recording layer using an FIB after the dye coating solution was applied, a section thereof was exposed, and then a thickness each of the in-groove and on-groove was determined while observing a shape of the section using an SEM (accelerating voltage: 1 kV, a magnification: × 50,000, observed at an inclination angle of 70°).

### Dye A

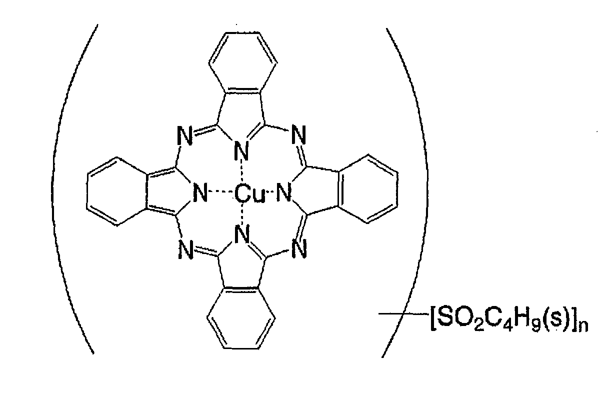

After the dye recording layer was formed, the resultant substrate was subjected to annealing treatment at 80°C for one hour in a clean oven.

Then, the dye recording layer was RF-sputtered with ZnS/SiO₂ (ZnS:SiO₂ = 8:2 (by mass)) to form a barrier layer (thickness: 5 nm), whereby a layered product was prepared.

Thereafter, a cover layer made of polycarbonate (Pure Ace, manufactured by Teijin Limited, thickness: 80 µm) was laminated to the formed barrier layer using a pressure sensitive adhesive to thus produce an optical information recording medium of Example 2. In this medium, a thickness of the pressure sensitive adhesive layer was 20 µm and a total thickness of the cover layer and the pressure sensitive adhesive layer was 100 µm.

### <Recording on Optical Information Recording Medium and Evaluation of Recording Characteristics (Measurement of Jitter)>

The produced optical information recording media were evaluated for jitter using an apparatus (DDU 1000, manufactured by Pulse Tech) equipped with a 405 nm laser and an NA 0.85 pickup. Random signals (4T signals) were recorded using a device TIA (time interval analyzer) at a clock frequency of 66 MHz and a linear velocity of 5.2 m/ s. The results are summarized in Table 8. Incidentally, the pulse width and power of laser light used are shown in Table 8. The pulse width (%) indicates the proportion of the pulse width when 4T signals are recorded.

The width and the height of a void were observed, measured and calculated via the measuring method described above, and the obtained results are summarized in Table 8.

**Table 8**

| | Laser Power (mW) | Pulse Width (%) | Void Width (nm) | Void Height (%) | Jitter (%) |
|---|---|---|---|---|---|
| Example 2 | 6.0 | 50 | 200 | 80 | 10.9 |
| Example 3 | 5.5 | 50 | 180 | 78 | 10.7 |
| Example 4 | 5.5 | 55 | 210 | 81 | 10.8 |
| Comparative Example 2 | 8.0 | 50 | 270 | 96 | Impossible to Measure |
| Comparative Example 3 | 2.0 | 50 | 30 | 15 | Impossible to Measure |

### (Examples 3 and 4, and Comparative Examples 2 and 3)

Information was recorded on a non-recorded optical information recording medium that was produced using the same optical information recording method as in Example 2, except that the pulse width and power of laser light were changed to those shown in Table 8 to record random signals. Assessment of jitter was carried out in the same manner as in Example 2. The obtained results are summarized in Table 8 above.

As is apparent from the results summarized in Table 8, it was impossible to measure a jitter of optical information recording media of Comparative Examples 2 and 3. In contrast, optical information recording media of Examples 2 to 4, on which information had been recorded by the optical information recording method of the present invention, had a favorably suppressed jitter, revealing that the optical information recording medium of the present invention has excellent and stable, recording and reproducing characteristics.

As detailed above, at least the preferred embodiments of the present invention provide an optical information recording medium that is capable of recording at high density and exhibits high recording characteristics (excellent jitter characteristics). The preferred embodiments of the invention also provide an optical information recording method that has stable recording and reproducing characteristics, and an optical information recording medium on which information has been recorded by this recording method.

## Claims

1. An optical information recording medium comprising a substrate including an on-groove and an in-groove, the substrate having successively disposed thereon a recording layer containing a dye, and a transparent sheet,
wherein information is recorded and reproduced by irradiating laser light from the side of the medium disposed with the transparent sheet, a width of the on-groove ranges from 50 to 140 nm, and a barrier layer is formed between the recording layer and the transparent sheet.

2. The optical information recording medium according to claim 1, wherein a height of the on-groove ranges from 20 to 50 nm.

3. The optical information recording medium according to claim 1 or claim 2, wherein the recording layer contains a dye selected from the group consisting of a cyanine dye, an oxonol dye, a metal complex dye, an azo dye and a phthalocyanine dye.

4. The optical information recording medium according to any of claims 1 to 3, wherein the barrier layer contains at least one selected from the group consisting of ZnS, TiO₂, SiO₂, ZnS-SiO₂, GeO₂, Si₃N₄, Ge₃N₄ and MgF₂.

5. The optical information recording medium according to any of claims 1 to 4, wherein the transparent sheet comprises polycarbonate or cellulose triacetate.

6. The optical information recording medium according to claim 5, wherein the transparent sheet has a layer thickness ranging from 0.01 to 0.2 mm.

7. An optical information recording method comprising irradiating an optical information recording medium, that includes a substrate having successively disposed thereon a dye recording layer and a cover layer on a surface of the recording layer via a pressure sensitive adhesive layer or an adhesive layer, with laser light from the side of the medium disposed with the cover layer to form a void at a signal pit portion in the dye recording layer and thereby carrying out recording of information,
wherein a pulse width and/or power of the laser light is controlled such that a width of the void falls within a range of 50 to 250 nm.

8. An optical information recording medium, wherein information has been recorded thereon by the optical information recording method according to claim 7.

9. The optical information recording method according to claim 7, wherein the dye recording layer contains a dye selected from the group consisting of a cyanine dye, an oxonol dye, a metal complex dye, an azo dye and a phthalocyanine dye.

10. The optical information recording method according to claim 7 or claim 9, wherein the dye recording layer has a layer thickness ranging from 20 to 500 nm.

11. The optical information recording method according to any of claims 7, 9 and 10, wherein the cover layer comprises a resin sheet having a surface roughness Ra of 5 nm or less.

12. The optical information recording method according to claim 11, wherein the resin sheet comprises polycarbonate or cellulose triacetate.

13. The optical information recording method according to claim 11 or claim 12, wherein the cover layer has a layer thickness ranging from 0.03 to 0.15mm.

14. An optical information recording method comprising irradiating an optical information recording medium, that includes a substrate having successively disposed thereon a dye recording layer and a cover layer on a surface of the recording layer via a pressure sensitive adhesive layer or an adhesive layer, with laser light from the side of the medium disposed with the cover layer to form a void at a signal pit portion in the dye recording layer and thereby carrying out recording of information,
wherein a pulse width and/or power of the laser light is controlled such that a proportion of a height of the void to a thickness of the dye recording layer falls within a range of 20 to 95%.

15. An optical information recording medium, wherein information has been recorded thereon by the optical information recording method according to claim 14.

16. The optical information recording method according to claim 14, wherein the dye recording layer contains a dye selected from the group consisting of a cyanine dye, an oxonol dye, a metal complex dye, an azo dye and a phthalocyanine dye.

17. The optical information recording method according to claim 14 or claim 16, wherein the dye recording layer has a layer thickness ranging from 20 to 500 nm.

18. The optical information recording method according to any of claims 14, 16 and 17, wherein the cover layer comprises a resin sheet having a surface roughness Ra of 5 nm or less.

19. The optical information recording method according to claim 18, wherein the resin sheet comprises polycarbonate or cellulose triacetate.

20. The optical information recording method according to claim 18 or claim 19, wherein the cover layer has a layer thickness ranging from 0.03 to 0.15 mm.
